# FASCICULE DE BREVET EUROPEEN

(11) **EP 3 020 048 B1**
(45) Date de publication et mention de la délivrance du brevet: **09.08.2017**
(21) Numéro de dépôt: 14749915.6
(22) Date de dépôt: 08.07.2014
(51) Int. Cl.: G21C 7/10, G21F 9/28, G21F 9/30, G21C 21/18

(54) **PROCEDE DE TRAITEMENT D'UNE AIGUILLE ABSORBANTE CONTENANT DU CARBURE DE BORE CONTAMINE ET DU SODIUM**
VERFAHTREN ZUM BEHANDELN EINES KONTROLLSTABES DER BORKARBID ENTHÄLT DAS MIT NATRIUM KONTAMINIERT IST
PROCESS FOR TREATMENT OF A CONTROL ROD CONTAINING BORE CARBIDE CONTAMINATED WITH SODIUM

(30) Priorité: 08.07.2013 FR 1356713
(43) Date de publication de la demande: 18.05.2016
(73) Titulaire: Commissariat à l'Énergie Atomique et aux Énergies Alternatives, 75015 Paris (FR)
(72) Inventeur: GODLEWSKI, Joël, F-13090 Aix en Provence (FR); GASTALDI, Olivier, F-13490 Jouques (FR); PELISSET, Bruno, F-04000 Digne Les Bains (FR); LECLERC, Arnaud, F-04100 Manosque (FR); BLEVIN, Gwendal, F-84120 Pertuis (FR)
(74) Mandataire: Dennemeyer & Associates S.A.
(86) Numéro de dépôt international: PCT/FR2014/051751
(87) Numéro de publication internationale: WO 2015/004382

(56) Documents cités:
- WO-A1-2010/007236

## Description

### DOMAINE TECHNIQUE

La présente invention se situe dans le domaine du traitement des déchets nucléaires.

Elle concerne en particulier le traitement des déchets contenant du sodium et au moins une matière radioactive. Un tel déchet est par exemple une aiguille de contrôle de la réactivité d'un Réacteur à Neutron Rapide refroidi au sodium (« RNR-Na »).

### ARRIERE-PLAN TECHNIQUE

Afin de contrôler la réactivité nucléaire, les réacteurs « RNR-Na » utilisent un matériau absorbant neutronique contenant du carbure de bore de formule simplifiée B₄C.

Ce matériau se présente généralement sous forme de pastilles cylindriques frittées empilées dans une gaine, afin de former un élément absorbant tel qu'une aiguille absorbante.

Sous l'action conjuguée de la température et de l'irradiation, les pastilles initialement massives de carbure de bore peuvent s'altérer jusqu'à l'apparition de fissures au sein des pastilles.

Lors du fonctionnement du réacteur « RNR-Na », le sodium du circuit primaire est quant à lui sous forme liquide et contient au moins une matière radioactive. Il circule dans l'espace entre les pastilles de carbure de bore et la gaine. Suite à l'altération des pastilles, le sodium liquide contaminé par la matière radioactive peut dès lors s'insinuer dans les fissures des pastilles de carbure de bore, voire le long des fractures des pastilles de carbure de bore lorsque les fissures ont abouti à des pastilles fragmentées. Dans la présente description, les fractures sont assimilées à des fissures.

Après l'arrêt du réacteur, les aiguilles absorbantes sont extraites du réacteur puis entreposées avant traitement. L'aiguille absorbante comprend alors des pastilles de carbure de bore fissurées, dont les fissures contiennent du sodium qui est sous forme solide et contaminé par au moins une matière radioactive.

L'aiguille absorbante contaminée constitue un déchet nucléaire qui présente un double risque en termes de sûreté et de sécurité :
- un risque chimique dû au sodium résiduel qui doit être maintenu sous gaz inerte (tel que l'argon ou l'azote) afin de ne pas présenter de risque de réaction chimique, par exemple avec l'eau ou l'oxygène de l'air. Suivant les conditions de l'entreposage avant traitement, une partie du sodium en surface peut néanmoins se transformer, par exemple en soude et en hydrogène au contact d'eau, et ce, de façon non maîtrisée ;
- un risque radiologique dû à la contamination du sodium par la matière radioactive que sont les isotopes radioactifs issus du circuit primaire du réacteur.

Afin de pouvoir traiter un tel déchet nucléaire par les filières classiques d'évacuation des déchets contaminés, il convient en premier lieu de supprimer le risque chimique, c'est-à-dire de transformer chimiquement ou d'extraire le sodium métallique contaminé présent dans l'aiguille absorbante, en particulier dans les fissures des pastilles de carbure de bore. Le document WO2010/007236 décrit le traitement, par une réaction de carbonation, du sodium contenu dans les pores ouvertes interconnectés d'une structure composée par exemple de carbone vitreux réticulé. L'utilisation d'un procédé de transformation chimique du sodium via une réaction directe entre l'eau et le sodium, est difficile à mettre en oeuvre : elle nécessite la mise en contact de ces deux espèces chimiques, mais également la maîtrise de la cinétique de la réaction, l'évacuation de la soude et de l'hydrogène produits, ainsi que l'absence d'accumulation de réactifs.

Or, le carbure de bore fritté est un matériau stable chimiquement et peu poreux, la porosité représentant généralement moins de 1 % du volume du matériau. Le sodium est donc très confiné au sein de ce matériau. Par conséquent, il faudrait procéder à de nombreuses découpes de la gaine pour traiter l'amalgame radioactif sodium-carbure de bore. Cette opération est néanmoins délicate et longue, car la dureté des pastilles de carbure de bore est telle qu'elle endommagerait et contaminerait les outils de découpe.

La présence d'une matière radioactive implique également de travailler dans une enceinte de confinement sous gaz inerte telle qu'une boîte à gants. Or, les opérations de découpe y sont là aussi délicates à cause des difficultés de manipulation inhérentes à ce type d'enceinte. Elles généreraient en outre la dispersion de matière radioactive dans l'enceinte, ce qui doit être limité au maximum.

La faible accessibilité du sodium contaminé complique donc grandement son traitement en tant que déchet.

### EXPOSE DE L'INVENTION

Un des buts de l'invention est donc d'éviter ou d'atténuer un ou plusieurs des inconvénients décrits ci-dessus, en réalisant un procédé qui permet notamment un traitement aisé du sodium et de la matière radioactive contenus dans les fissures d'un matériau à base de carbure de bore fritté qui est un matériau stable chimiquement et de grande dureté, le sodium à traiter étant difficilement accessible à cause de sa présence au sein des fissures.

L'objet de l'invention concerne ainsi un procédé de traitement d'une aiguille absorbante, l'aiguille comprenant une gaine dans laquelle se trouve un matériau à base de carbure de bore fritté présentant des fissures, les fissures contenant du sodium et au moins une matière radioactive.

Le procédé comprend une étape de traitement au cours de laquelle on transforme par une réaction de carbonatation le sodium en carbonate de sodium en mettant en contact le matériau avec un mélange réactionnel de traitement comprenant en pourcentage molaire 0,5 % à 5 % de vapeur d'eau, 5 % à 25 % de dioxyde de carbone et 74,5 % à 94,5 % d'un gaz inerte chimiquement, de telle sorte que l'expansion du carbonate provoque l'ouverture des fissures et de la gaine à partir d'au moins une fente pratiquée dans la gaine ainsi que la propagation du procédé de traitement au sein du matériau.

L'étape de traitement comprend la mise en contact du matériau avec un mélange réactionnel de traitement afin de réaliser une réaction de carbonatation dans laquelle la soude obtenue par réaction d'hydrolyse, suite à la mise en contact de la vapeur d'eau avec le sodium, est transformée en carbonate après réaction avec le dioxyde de carbone contenu dans le mélange réactionnel de traitement.

Le mélange réactionnel de traitement comprend des réactifs sous forme gazeuse. Il entre donc plus facilement en contact avec le sodium difficilement accessible qui est contenu dans les fissures des pastilles de carbure de bore, voire avec le sodium présent aux fractures ou aux interfaces des différentes pastilles de carbure de bore fritté. Cette performance ne peut être atteinte par un procédé de traitement utilisant seulement de l'eau, même en grande quantité.

La réaction de carbonatation mise en oeuvre selon l'étape de traitement génère un carbonate composé essentiellement du carbonate de sodium Na₂CO₃ et/ou de l'hydrogénocarbonate de sodium NaHCO₃ assimilé dans la présente description à du carbonate de sodium. Le volume qu'occupe le carbonate est supérieur au volume initialement occupé par le sodium.

La réaction de carbonatation est dès lors menée de telle façon que l'expansion volumique du carbonate provoque avantageusement l'élargissement des fissures et l'ouverture de la gaine, cette dernière ayant été au préalable affaiblie mécaniquement par la réalisation d'au moins une fente. Les ouvertures ainsi provoquées ouvrent la voie à la poursuite de la réaction de carbonatation et sa propagation à des zones qui étaient initialement inaccessibles aux réactifs que sont l'eau et le dioxyde de carbone. L'ensemble du sodium contenu dans la gaine peut alors être traité.

La fente est de préférence longitudinale et/ou réalisée sur toute la longueur de la gaine.

La gaine étant généralement métallique, le plus souvent composée d'acier inoxydable, la fente est par exemple réalisée à l'aide d'un laser.

Le cas échéant, les extrémités de la gaine peuvent être découpées selon un plan transversal afin d'augmenter la cinétique des réactions chimiques mises en jeu lors des étapes de prétraitement et de traitement.

Suite à l'ouverture des fissures et de la gaine, la réaction de carbonatation selon l'étape de traitement se poursuit par augmentation progressive de la surface de contact entre le sodium et le mélange gazeux réactionnel.

Ainsi, l'ouverture des fissures et de la gaine provoque l'accélération de la réaction de carbonatation qui peut dès lors se propager au sein de l'ensemble de la gaine afin de traiter la totalité du sodium.

Ce résultat est obtenu malgré le fait que les fissures ne sont généralement pas connectées et constituent des espaces réactionnels confinés. Ces espaces empêchent ou limitent a priori la propagation de la réaction de carbonatation, ou de la réaction d'hydrolyse utilisant seulement de l'eau qui est classiquement envisagée pour ce type de traitement.

Malgré la faible accessibilité initiale du sodium contenu dans les fissures du matériau, le mélange réactionnel de traitement peut réagir en profondeur et en totalité avec le sodium contaminé. La gaine peut dès lors être traitée à l'aide du procédé de l'invention sans que cela ne nécessite de nombreuses opérations de découpe.

Ceci est particulièrement avantageux, car de par la présence d'une matière radioactive, le procédé de traitement de l'invention est le plus souvent réalisé dans une enceinte de confinement telle qu'une boîte à gants, une cellule blindée ou un réacteur chimique, dans lesquelles, comme indiqué précédemment, on cherche à limiter les opérations de découpe.

Par ailleurs, du fait de la mise en oeuvre de la réaction de carbonatation, le procédé de traitement de l'invention a pour avantage de ne produire que des déchets solides (carbonate de sodium, carbure de bore, gaine et matière radioactive) et gazeux (hydrogène). Aucun effluent radioactif liquide ou gazeux n'est donc généré.

Le carbonate de sodium est un produit stable et inerte. Il est facilement manipulable et compatible avec les filières d'exutoire final des aiguilles de carbure de bore. Il peut être directement stocké dans un entreposage profond de longue durée.

L'hydrogène produit lors de la rédaction de carbonatation peut quant à lui être évacué par un gaz de balayage.

Le procédé de traitement de l'invention est également aisément contrôlable puisque la réaction de carbonatation selon l'étape de traitement peut être ralentie en diminuant la proportion de vapeur d'eau dans le mélange gazeux réactionnel de traitement, voire arrêtée en remplaçant ce mélange par du gaz inerte. Cela confère une grande sécurité au procédé de l'invention.

Associé à sa relative simplicité de mise en oeuvre, le procédé de l'invention permet également de traiter en une seule opération un plus grand nombre d'aiguilles absorbantes, ce qui constitue un avantage économique important.

Une difficulté supplémentaire peut néanmoins se présenter lorsqu'une croûte comprenant de la soude (NaOH) et/ou de l'oxyde de sodium (Na₂O) recouvre au moins une partie de la surface délimitant les fissures du matériau. Une telle croûte peut se former par hydrolyse du sodium en présence d'eau, puis concentration et cristallisation des produits obtenus. Elle recouvre alors du sodium présent dans les fissures et constitue une couche protectrice empêchant la mise en contact du mélange réactionnel de traitement avec le sodium sous-jacent, et donc la propagation de la réaction de carbonatation afin de traiter le sodium contaminé présent sous la croûte.

À ce titre, selon un mode de réalisation préféré du procédé de traitement de l'invention, on réalise une étape de prétraitement dans laquelle on met en contact le matériau avec un mélange réactionnel de prétraitement comprenant en pourcentage molaire 0,5 % à 25 % de dioxyde de carbone et le reste d'un gaz inerte chimiquement. L'étape de prétraitement précède l'étape de traitement.

Le mélange réactionnel de prétraitement est un mélange sec qui ne contient pas d'eau ou de faibles quantités d'eau, de telle sorte que le dioxyde de carbone qu'il contient détruit la croûte en transformant la soude et/ou l'oxyde de sodium en carbonate de sodium. Les faibles quantités d'eau admissibles sont donc celles qui évitent une croissance de la croûte qui est supérieure à sa destruction lors de l'étape de prétraitement.

Il comprend un gaz inerte chimiquement qui présente les mêmes propriétés que celui du mélange réactionnel de traitement. Tout gaz qui est inerte chimiquement vis-à-vis du sodium peut convenir. Le gaz inerte est par exemple l'azote, l'argon ou leur mélange. Le mélange réactionnel de prétraitement et de traitement peuvent être identiques.

La composition chimique du mélange réactionnel de traitement se distingue donc essentiellement de celle du mélange réactionnel de prétraitement par la présence supplémentaire d'eau. Il en résulte une simplification de l'installation dans laquelle se déroule le procédé de traitement de l'invention, telle que par exemple une enceinte de confinement. Le nombre de conduites visant à introduire les réactifs dans l'enceinte est ainsi limité. Ceci renforce le confinement de l'enceinte et donc la robustesse et la sécurité du procédé de traitement malgré la présence d'une matière radioactive.

L'étape de prétraitement produit du carbonate de sodium qui est un composé également obtenu à l'issue de l'étape de traitement. La composition chimique des déchets obtenus à l'issue des étapes de traitement et de prétraitement est ainsi limitée. Cela réduit avantageusement le nombre de filières d'évacuation et d'opérations nécessaires au traitement ultérieur des déchets.

### EXPOSE DETAILLE DE L'INVENTION

Dans la présente description de l'invention, un verbe tel que « comprendre », « comporter », « incorporer », « inclure » et ses formes conjuguées sont des termes ouverts et n'excluent donc pas la présence d'élément(s) et/ou étape(s) additionnels s'ajoutant aux élément(s) et/ou étape(s) initiaux énoncés après ces termes. Toutefois, ces termes ouverts visent en outre un mode de réalisation particulier dans lequel seul(s) le(s) élément(s) et/ou étape(s) initiaux, à l'exclusion de tout autre, sont visés ; auquel cas le terme ouvert vise en outre le terme fermé « consister en », « constituer de » et ses formes conjuguées.

L'expression « et/ou » entend relier des éléments en vue de désigner leur présence individuelle, mais également leur mélange ou combinaison.

Par ailleurs, sauf indication contraire, les valeurs aux bornes sont incluses dans les gammes de paramètres indiquées.

Malgré la présence d'une matière radioactive, telle que par exemple le césium ou le tritium (produits de fission), le cobalt 60 ou le manganèse 54 (produits d'activation), le procédé de l'invention traite le sodium présent dans les fissures du matériau à base de carbure de bore fritté.

Ce matériau se présente généralement sous forme de pastille. Il est constitué en totalité ou partie de carbure de bore fritté dont la composition en atomes de carbone est généralement comprise entre 8,8 % et 20 %, et peut donc éventuellement varier dans cette gamme par rapport à la formule stoechiométrique B₄C correspondant à 20 % d'atomes de carbone, voire présenter un excès de carbone jusqu'à 1 % en masse.

Le procédé de traitement de l'invention comprend une étape de traitement au cours de laquelle le matériau est mis en contact avec un mélange réactionnel de traitement comprenant en pourcentage molaire 0,5 % à 5 % de vapeur d'eau, 5 % à 25 % de dioxyde de carbone et 75 % à 94,5 % d'un gaz inerte chimiquement. La proportion minoritaire d'eau dans le mélange rédactionnel de traitement évite toute condensation d'eau sur les parois de la gaine et autorise ainsi un traitement du sodium en toute sécurité.

La durée de mise en contact du mélange réactionnel de traitement ou de prétraitement avec le matériau dépend respectivement de la quantité de la croûte ou du sodium à traiter, ou également de la composition du mélange réactionnel. L'homme du métier peut aisément adapter cette durée afin d'obtenir un traitement du sodium contenu dans l'aiguille absorbante qui soit le plus complet possible, ce qui est indiqué par exemple par la fin du dégagement de l'hydrogène.

La mise en contact avec le mélange réactionnel de traitement ou de prétraitement est par exemple effectuée pendant une durée comprise entre 5 heures et 15 jours.

Elle est préférentiellement effectuée à une température comprise entre 40 °C et 55 °C. Concernant l'étape de traitement, cela évite que l'eau ne condense, même aux concentrations maximales de 5 % molaire de vapeur d'eau, et ne réagisse de façon violente avec le sodium.

Puisque le matériau contient au moins une matière radioactive, le traitement selon l'invention est le plus souvent réalisé dans une enceinte de confinement telle qu'une boîte à gants ou une cellule blindée.

Le mélange réactionnel de traitement ou de prétraitement est alors généralement introduit dans l'enceinte de confinement selon un débit permettant son renouvellement en continu au moins une fois par heure, typiquement une à deux fois par heure.

D'autres objets, caractéristiques et avantages de l'invention vont maintenant être précisés dans la description qui suit d'un mode de réalisation particulier du procédé de l'invention, donné à titre illustratif et non limitatif.

### EXPOSE DE MODE(S) DE REALISATION PARTICULIER(S)

À l'aide d'un laser, on découpe les extrémités d'une gaine métallique comprenant des pastilles de carbure de bore fritté qui présentent des fissures et qui contiennent du sodium et une matière radioactive.

On réalise ensuite une fente longitudinale sur la gaine métallique.

Dans une boîte à gants thermostatée à 45 °C, les pastilles sont mises en contact avec un mélange réactionnel de prétraitement visant à éliminer la croûte de soude se formant en surface des fissures. Ce mélange contient, en pourcentage molaire, 10 % de dioxyde de carbone et 90 % d'azote.

Les pastilles sont ensuite mises en contact avec un mélange réactionnel de traitement contenant, en pourcentage molaire, 3 % de vapeur d'eau, 10 % de dioxyde de carbone et 87 % d'azote.

Après quelques heures, l'absence de dégagement d'hydrogène indique la fin du traitement.

Les déchets solides obtenus que sont le carbonate de sodium, le carbure de bore, la gaine et la matière radioactive peuvent être conditionnés afin d'être évacués vers les filières adaptées.

## Revendications

1. Procédé de traitement d'une aiguille absorbante, ladite aiguille comprenant une gaine dans laquelle se trouve un matériau à base de carbure de bore fritté dont la porosité représente moins de 1 % du volume du matériau, le matériau présentant des fissures qui contiennent du sodium et au moins une matière radioactive, le procédé comprenant une étape de traitement au cours de laquelle on transforme par une réaction de carbonatation le sodium en carbonate de sodium en mettant en contact le matériau avec un mélange réactionnel de traitement comprenant en pourcentage molaire 0,5 % à 5 % de vapeur d'eau, 5 % à 25 % de dioxyde de carbone et 74,5 % à 94,5 % d'un gaz inerte chimiquement, de telle sorte que l'expansion du carbonate provoque l'ouverture des fissures et de la gaine à partir d'au moins une fente pratiquée dans la gaine ainsi que la propagation dudit procédé de traitement au sein du matériau.

2. Procédé de traitement selon la revendication 1, dans lequel, avant l'étape de traitement, on réalise une étape de prétraitement par mise en contact du matériau avec un mélange réactionnel de prétraitement comprenant en pourcentage molaire 0,5 % à 25 % de dioxyde de carbone et le reste d'un gaz inerte chimiquement.

3. Procédé de traitement selon la revendication 1 ou 2, dans lequel le matériau est sous forme de pastille.

4. Procédé de traitement selon l'une quelconque des revendications précédentes, dans lequel le carbure de bore a une composition en atomes de carbone comprise entre 8,8 % et 20 %.

5. Procédé de traitement selon l'une quelconque des revendications précédentes, dans lequel le gaz inerte est l'azote, l'argon ou leur mélange.

6. Procédé de traitement selon l'une quelconque des revendications précédentes, dans lequel la mise en contact avec le mélange réactionnel de prétraitement ou de traitement est effectuée à une température comprise entre 40 °C et 55 °C.

7. Procédé de traitement selon l'une quelconque des revendications précédentes, dans lequel le procédé est réalisé dans une enceinte de confinement.

8. Procédé de traitement selon la revendication 7, dans lequel l'enceinte de confinement est une boîte à gants, une cellule blindée ou un réacteur chimique.

9. Procédé de traitement selon la revendication 7 ou 8, dans lequel le mélange réactionnel de traitement ou de prétraitement est introduit dans l'enceinte de confinement selon un débit permettant son renouvellement en continu au moins une fois par heure.

## Patentansprüche

1. Verfahren zum Behandeln eines Kontrollstabs, wobei der Stab eine Hülle umfasst, in welcher sich ein Material auf der Basis von gesintertem Borcarbid befindet, dessen Porosität weniger als 1 % des Materialvolumens darstellt, wobei das Material Fissuren aufweist, die Natrium und mindestens ein radioaktives Material enthalten, wobei das Verfahren einen Behandlungsschritt umfasst, bei dem mittels einer Carbonatisierungsreaktion das Natrium in Natriumcarbonat umgewandelt wird, wobei das Material mit einem Behandlungsreaktionsgemisch in Kontakt versetzt wird, welches in Molprozent 0,5 % bis 5 % Wasserdampf, 5 % bis 25 % Kohlendioxid und 74,5 % bis 94,5 % eines chemisch inerten Gases umfasst, so dass die Expansion des Carbonats zur Öffnung der Fissuren und der Hülle ab mindestens einem Schlitz, welcher in der Hülle ausgebildet ist, sowie der Weiterverbreitung des Behandlungsverfahrens innerhalb des Materials führt.

2. Verfahren zum Behandeln nach Anspruch 1, wobei vor dem Behandlungsschritt ein Vorbehandlungsschritt durch Inkontaktversetzen des Materials mit einem Vorbehandlungsreaktionsgemisch durchgeführt wird, umfassend im Molprozent 0,5 % bis 25 % Kohlendioxid und den Rest eines chemisch inerten Gases.

3. Verfahren zum Behandeln nach Anspruch 1 oder 2, wobei das Material in Form von Pellet vorliegt.

4. Verfahren zum Behandeln nach einem der vorangehenden Ansprüche, wobei das Borcarbid eine Zusammensetzung aus Kohlenstoffatomen zwischen 8,8 % und 20 % inklusive hat.

5. Verfahren zum Behandeln nach einem der vorangehenden Ansprüche, wobei das inerte Gas Stickstoff, Argon oder ihr Gemisch ist.

6. Verfahren zum Behandeln nach einem der vorangehenden Ansprüche, wobei das Inkontaktversetzen mit dem Vorbehandlungs- oder Behandlungsreaktionsgemisch bei einer Temperatur zwischen 40 °C und 55 °C inklusive erfolgt.

7. Verfahren zum Behandeln nach einem der vorangehenden Ansprüche, wobei das Verfahren in einem Sicherheitsbehälter durchgeführt wird.

8. Verfahren zum Behandeln nach Anspruch 7, wobei der Sicherheitsbehälter eine Handschuhbox, eine abgeschirmte Zelle oder ein chemischer Reaktor ist.

9. Verfahren zum Behandeln nach Anspruch 7 oder 8, wobei das Vorbehandlungs-oder Behandlungsreaktionsgemisch in den Sicherheitsbehälter in einer Menge eingeführt wird, die seine kontinuierliche Erneuerung mindestens einmal pro Stunde erlaubt.

## Claims

1. Method for treating an absorber pin, said pin comprising a cladding in which there is a material based on sintered boron carbide whose porosity represents less than 1% of the volume of the material, the material having cracks that contain sodium and at least one radioactive substance, the method comprising a treatment step in which the sodium is converted to sodium carbonate by a carbonation reaction by contacting the material with a treatment reaction mixture comprising in molar percentage 0.5% to 5% of steam, 5% to 25% of carbon dioxide and 74.5% to 94.5% of a chemically inert gas, in such a way that expansion of the carbonate causes opening up of the cracks and of the cladding starting from at least one slit made in the cladding as well as the propagation of said method of treatment within the material.

2. Method of treatment according to claim 1, wherein, before the treatment step, a pretreatment step is carried out by contacting the material with a pretreatment reaction mixture comprising in molar percentage 0.5% to 25% of carbon dioxide and a chemically inert gas for the remainder.

3. Method of treatment according to claim 1 or 2, wherein the material is in the form of pellets.

4. Method of treatment according to any one of the preceding claims, wherein the boron carbide has a composition of carbon atoms between 8.8% and 20%.

5. Method of treatment according to any one of the preceding claims, wherein the inert gas is nitrogen, argon or a mixture thereof.

6. Method of treatment according to any one of the preceding claims, wherein contacting with the pretreatment or treatment reaction mixture is carried out at a temperature between 40°C and 55°C.

7. Method of treatment according to any one of the preceding claims, wherein the method is carried out in a confinement enclosure.

8. Method of treatment according to claim 7, wherein the confinement enclosure is a glove box, a hot cell or a chemical reactor.

9. Method of treatment according to claim 7 or 8, wherein the treatment or pretreatment reaction mixture is introduced into the confinement enclosure at a flow rate allowing its continuous renewal at least once per hour.
